# EUROPEAN PATENT SPECIFICATION

(11) **EP 2 728 145 B1**
(45) Date of publication and mention of the grant of the patent: **04.12.2019**
(21) Application number: 13189509.6
(22) Date of filing: 21.10.2013
(51) Int. Cl.: F02C 7/26, F02C 9/26

(54) **Systems and methods for generating a predictable load upon completion of a start sequence of a turbine**
Systeme und Verfahren zur Erzeugung einer vorhersehbaren Last nach Beendigung einer Startsequenz einer Turbine
Systèmes et procédés permettant de produire une charge prévisible lors de l'exécution de la séquence de démarrage d'une turbine

(30) Priority: 05.11.2012 US 201213669003
(43) Date of publication of application: 07.05.2014
(73) Proprietor: General Electric Company, Schenectady, NY 12345 (US)
(72) Inventor: Dion Quellet, Noemie, Greenville, SC South Carolina 29615-4614 (US); Race, Nathan S., Greenville, SC South Carolina 29615-4614 (US)
(74) Representative: BRP Renaud & Partner mbB Rechtsanwälte Patentanwälte Steuerberater

(56) References cited:
- EP-A2- 1 707 757
- EP-A2- 2 339 128
- JP-B2- 3 673 017
- US-A- 4 868 754
- US-A- 5 305 230

## Description

This disclosure relates generally to turbines and more particularly to systems and methods for generating a predictable load upon completion of a start sequence of a turbine.

A start sequence of a gas turbine may be controlled according to a predefined nominal load rate which is aimed at generating a desired load from the gas turbine after a specified amount of time following the start sequence initiation. However, in practice, the gas turbine start profile can deviate from the original path set forth with the nominal load rate due to inherent variability related, but not exclusive to, fuel composition, fuel flow, air flow, acceleration rate, starting means torque, sensor feedback, time to synchronize to the electrical grid, and other parameters. These deviations may result in significant variations in start time for the gas turbine and, consequently, to an inability to predictably achieve a desired load in a specified time.

Therefore, conventionally, to guarantee that the gas turbine will reach a desired load in a specified time upon completion of the start sequence, even in the worst-case scenario, a nominal load rate including a significant margin is implemented. This approach often leads to unnecessarily fast loading of the turbine, imposing undue thermal stress and impacting component life, blade tip clearances, and performance of the gas turbine.

Another conventional approach that can be used to address variation in gas turbine start time is application of a closed loop acceleration control scheme. In this approach, the gas turbine speed or other suitable startup parameter is monitored against time. A control routine determines whether there are any errors in the gas turbine speed or other parameters and controls various effectors, such as fuel flow and starting torque, to correct the errors. However, acceleration control is not sufficient to ensure a desired load is achieved at a certain time following start initiation as this control scheme is not applicable in the latter portion of the start, after the gas turbine generator is synchronized to the grid and holds a fixed speed.

According to the teaching of US 4,868,754, a method for providing an optimized start-up schedule for a thermal power plant is determined. The method comprises providing an initial start-up schedule running a simulation of the start-up schedule, determining whether estimated values of selected parameters, such as stresses, are within predetermined allowable ranges or not, and correcting the start-up schedule if such values are outside a permissible range. Thus, the therein determined start-up schedule can impossibly guarantuee that a desired final load is predictably attained within a start duration.

US 5,305,230 teaches a process control system which controls a large scale plant such as thermal power plant. This process control system includes a target setting unit for setting an operation target, a control unit for receiving a signal indicating the operation target and for outputting a controlled variable to operate the process, an evaluation unit for quantitatively evaluating operation characteristics corresponding to the operation target of the process operated on the basis of a signal indicating the controlled variable supplied from the control unit, a modification unit for extracting an optimum operation process qualitatively squaring or conforming with the evaluated value derived by the evaluation unit out of a modification rule predetermining operation unit in qualitative relation between the operation characteristics and the operation target of the process and for determining the modification rate of the control unit, a storage unit having a model of a neural network for storing a relation between the operation target and the modification rate derived by the modification unit as a connection state within a circuit, and a learning unit for making the model of the neural network learn the relation between the operation target and the modification rate. While US 5,305,230 teaches startup optimization it is silent about controlling a startup sequence so as to attain a desired final load within a predefined start duration.

Accordingly, disclosed is a method and a system as set forth in the claims.

The present disclosure relates to systems and methods for generating a predictable load upon a completion of a start sequence of a gas turbine. According to one embodiment, a system can be provided. The system can include a controller to control the gas turbine, and a processor communicatively coupled to the controller. The processor may be configured to receive a start duration and a desired final load, and calculate a target load rate to reach the desired final load within the start duration based on the desired final load and the start duration. Measurements of a present load may be periodically received from a measuring device and used to recalculate the target load rate. A present load rate may be periodically adjusted by the controller based on the recalculation.

In one embodiment, a method can be provided. The method can include receiving a start duration and a desired final load, and calculating a target load rate to reach the desired final load within the start duration. A present load may be periodically measured, and based on the measurements, the target load rate may be recalculated. A present load rate may be periodically adjusted based on the recalculation.

In one embodiment, another system can be provided. The system can include a gas turbine, a generator coupled to the gas turbine, a controller coupled to the gas turbine, and a processor coupled to the controller. The processor may be configured to receive a start duration and a desired final load, and calculate a target load rate to reach the desired final load within the start duration. Measurements of a present load may be periodically received from a measuring device and used to recalculate the target load rate. The controller can periodically adjust, based on the recalculation, a present load rate. In some embodiments, the system can include an output device configured to display data related to the start sequence of the gas turbine.

Other embodiments and aspects will become apparent from the following description taken in conjunction with the following drawings.
FIG. 1 depicts a simplified block diagram illustrating an example environment and a system, in accordance with an embodiment of the disclosure.
FIG. 2 depicts a representation of example path variations during a startup sequence of a gas turbine, in accordance with an embodiment of the disclosure.
FIG. 3 depicts a representation of example path adjustments over a period of the loading portion of the start duration of a gas turbine, in accordance with an embodiment of the disclosure.
FIG. 4 depicts a process flow diagram illustrating an example method, in accordance with an embodiment of the disclosure.
FIG. 5 depicts a process flow diagram illustrating an example method, in accordance with an embodiment of the disclosure.
FIG. 6 depicts a block diagram illustrating a controller for controlling a turbine, in accordance with an embodiment of the disclosure.

The following detailed description includes references to the accompanying drawings, which form part of the detailed description. The drawings depict illustrations in accordance with example embodiments. These example embodiments, which are also referred to herein as "examples," are described in enough detail to enable those skilled in the art to practice the present subject matter. The example embodiments may be combined, other embodiments may be utilized, or structural, logical, and electrical changes may be made, without departing from the scope of the claimed subject matter. The following detailed description is, therefore, not to be taken in a limiting sense, and the scope is defined by the appended claims.

The embodiments described herein relate to systems and methods for generating a predictable load upon completion of a start sequence of a turbine. Certain embodiments can provide for generating a predictable load upon completion of a start sequence of a turbine by calculating a target load rate for a final phase of a turbine startup, a turbine loading, and then periodically adjusting, a present load rate during the turbine loading based on the periodic measurements. The target load rate for the turbine loading may be calculated after synchronizing the turbine with a utility grid, which is when a number of startup operations with significant variability are performed. Thus, the target load rate may be calculated based on the period of time left for the start sequence and the desired final load.

However, over time, the load rate of the turbine may deviate from the target load rate. To detect such deviations, measurements of a present load of the turbine may be taken periodically during the turbine loading. Based on these measurements, the target load rate may be recalculated to achieve the desired final load within the start duration. The present load rate may be then adjusted according to the recalculations.

One will recognize the applicability of embodiments of the disclosure to apply to changing load during operation or any time after completion of a start sequence of a turbine.

The technical effects of certain embodiments of the disclosure may include generating a predictable load upon completion of a start sequence of a turbine. In particular, technical effects of certain embodiments of the disclosure may include generating a predictable load by manipulating elements of the turbine startup to achieve the desired load within a specified start duration. Since timely loading of a turbine allows avoiding undue thermal stress on turbines, further technical effects of certain embodiments of the disclosure may include increasing equipment life.

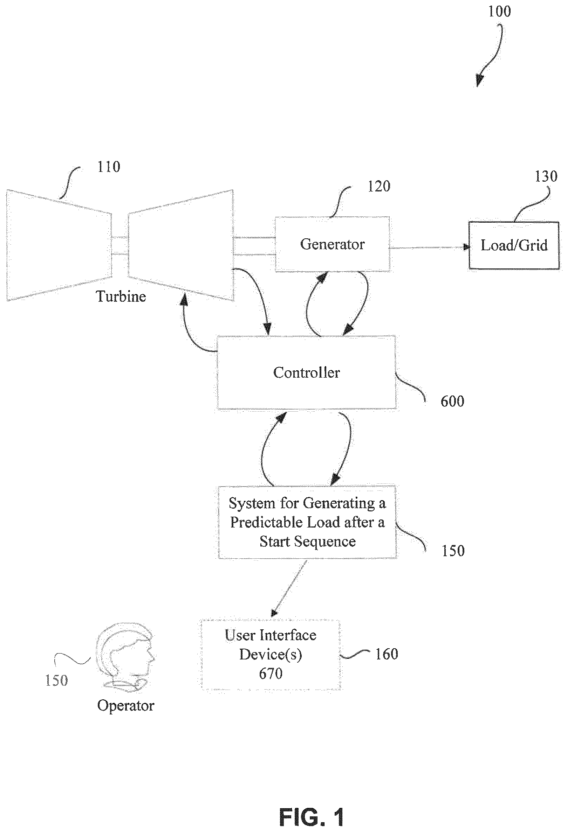

Referring now to FIG. 1, a block diagram illustrates a system environment 100 suitable for implementing a method for generating a predictable load upon completion of a start sequence of a turbine, in accordance with one or more example embodiments. In particular, the system environment 100 may comprise a turbine 110, generator 120, load/grid 130, controller 600, system for generating a predictable load upon completion of a start sequence of a turbine 110, and user interface device(s) 670. An operator 150 may interact with the system environment, particularly via the user interface device(s) 670.

The turbine 110 may be coupled to the generator 120. The generator 120 may be then coupled to a load/grid 130 and provide a supply of electric power to the load/grid 130. The load/grid 130 may include distribution systems known in the art.

The operation of the turbine 110 may be managed through the controller 600. The controller 600 may interact with the system for generating a predictable load upon completion of a start sequence of a turbine 110 to receive a start duration and a desired final load; calculate a target load rate to reach the desired final load within the start duration; periodically receive measurements of a present load at a respective time from a measuring device; periodically recalculate the target load rate based on the measurements of the present load; and periodically adjust a present load rate based on the recalculation.

The controller may also be coupled to the generator 120 to manage its operation and receive operational data from the generator 120.

The operator 150 may interact with the controller 600 and the system for generating a predictable load upon completion of a start sequence of a turbine 110 via the user interface device 670, such as a keyboard, mouse, control panel, or any other device capable of communicating data to and from the controller 600. Additionally, the operator 150 may view data on the start sequence of the turbine 110 displayed by an output device.

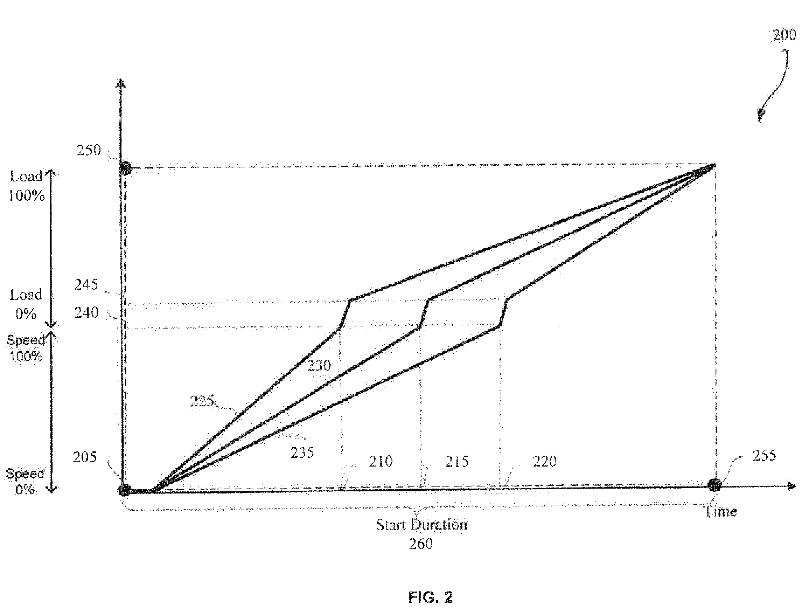

FIG. 2 depicts a representation 200 of example path variations during a start sequence of a gas turbine in accordance with an embodiment of the disclosure.

The startup of the turbine 110 may include a sequence of startup operations (i.e., ignition, acceleration, synchronization, and loading) comprising a start duration 260. Many of the startup operations imply inherent variations, which may be related to, for example, fuel composition, fuel flow, airflow, acceleration rate, starting means torque, sensor feedback, time to synchronize to the electrical grid, and other suitable parameters. Therefore, a period of time from a start initiation time 205 to a moment when the turbine 110 reaches 100% speed 240 and the generator 120 is synchronized to the load/grid 130, thereby producing a synchronization load 245, may differ. For example, in case of a fast acceleration 225, the synchronization load 245 may be reached at a low synchronization time 210. For a normal acceleration 230, the synchronization load 245 may be reached at a nominal synchronization time 215. Whereas, for a slow acceleration 235, the synchronization load 245 may be reached at a high synchronization time 220. Therefore, depending on startup parameters, the synchronization time of the generator 120 may differ, and accordingly, the period of time remaining for loading to a start completion time 255 may also differ.

To ensure that a desired final load 250 will be reached at the start completion time 255, a target load rate for each startup may be calculated when the synchronization load 245 is reached. Calculation of the target load rate may be based on a remaining start duration determined as a period of time from the elapsed synchronization time 210, 215, or 220 to the start completion time 255. In this manner, the turbine 110 startup process may be customized for each startup, following the target load rate based on parameters of a specific startup, rather than following the nominal load rate.

In certain example embodiments, the calculation of the target load rate may be based on an assumption that the target load rate is to remain constant until the desired final load 250 is reached.

In other example embodiments, the calculation of the target load rate may be based on an objective function, cost function, utility function, or energy function. Thus, the target load rate may vary according to the function used for its calculation.

However, in the process of loading, a present load rate of the turbine 110 may deviate from the calculated target load rate. Such deviations may result in untimely reaching of the desired final load 250. So, according to various embodiments, a present load of the turbine 110 may be periodically measured, and the target load rate may be periodically recalculated based on the measurements. The present load rate may be adjusted accordingly.

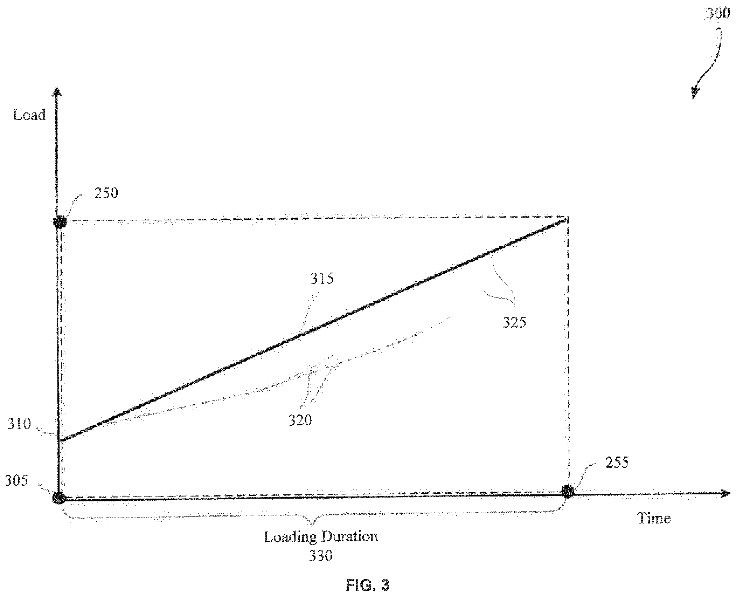

FIG. 3 depicts a representation of example adjustments of a path 300 over a period of the loading portion of a start duration of a gas turbine, in accordance with an embodiment of the disclosure. A target load rate 315 may represent a line from a synchronization load 310 (the load after closing the generator breaker) at a synchronization time 305 to the desired final load 250 at the start completion time 255. In FIG. 3, the target load rate 315 is shown as a straight line; however, it may have any form in accordance to the function used for its calculation.

The synchronization load 310 may be determined after acceleration of the turbine 110 and a closure of a generator breaker (or connection of the generator 120 to an electrical grid). The target load rate 315 may be calculated based on the desired final load 250 and a loading duration 330. The loading duration 330 may correspond to a period of time from the synchronization time 305 to the start completion time 255.

In certain example embodiments, the calculation of the target load rate 315 may include a predetermined time delay to account for inherent variations or load swings that may take place after closing the generator breaker and therefore ensuring a stable load measurement is utilized.

The loading phase of the turbine startup may also be subject to variations, so a present load rate may deviate from the target load rate 315. To detect deviations 320, a measuring device may measure a present load of the turbine 110 periodically or constantly. When the deviation 320 is detected, recalculation of the target load rate 315 may be performed based on the measurements. As a result, a recalculated target load rate 325 may be periodically determined. The recalculation may be based on an assumption that the recalculated target load rate is to remain constant until the desired final load 250 is reached, or on an assumption that the target load rate may vary according to an objective function, for example, hardware life consumption, fuel consumption, emissions, and so forth.

When the recalculated target load rate 325 is determined, the present load rate may be adjusted to fit the recalculated target load rate 325.

In certain example embodiments, the recalculated target load rate 325 may be based on some operational limits (for example, a service life, compressor protection, component thermal limits, combustor dynamics, combustor blow out, combustor emissions, bottoming cycle specifications, and so forth) of the turbine 110 or other elements.

Adjusting the load rate according to the recalculated target load rate 325, which is based on detected deviations 320, allows achieving a predictable load upon start completion, since the load rate is adjusted based on the present position to the desired final load 250 at the start completion time 255.

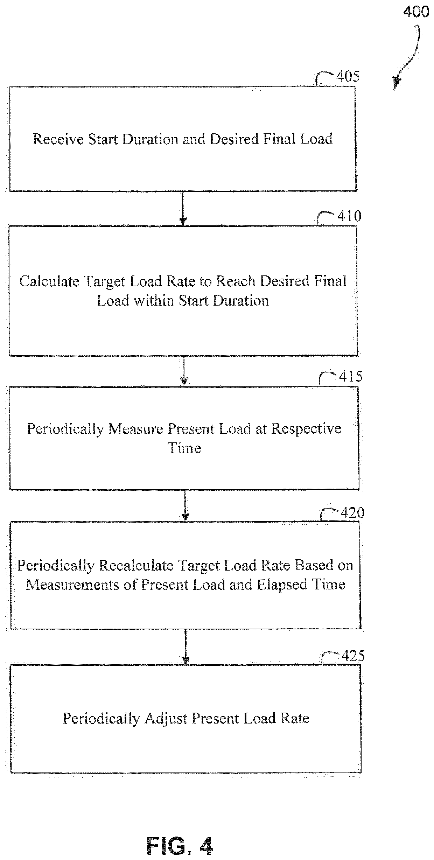

FIG. 4 depicts a process flow diagram illustrating an example method 400 for generating a predictable load upon completion of a start sequence of a gas turbine, in accordance with an embodiment of the disclosure. The method 400 may be performed by processing logic that may comprise hardware (e.g., dedicated logic, programmable logic, and microcode), software (such as software run on a general-purpose computer system or a dedicated machine), or a combination of both. In one example embodiment, the processing logic resides at the controller 600, which may reside in a user device or in a server. The controller 600 may comprise processing logic. It will be appreciated by one of ordinary skill in the art that instructions said to be executed by the controller 600 may, in fact, be retrieved and executed by one or more processors. The controller 600 may also include memory cards, servers, and/or computer discs. Although the controller 600 may be configured to perform one or more steps described herein, other control units may be utilized while still falling within the scope of various embodiments.

As shown in FIG. 4, the method 400 may commence at operation 405 with receiving the loading duration 330 and the desired final load 250 of the turbine 110. The loading duration 330 may correspond to a period of time from the synchronization time 305 to the start completion time 255. The synchronization time 305 may be determined as a time when the turbine 110 reaches the synchronization load 310 and the generator 120 is connected to an electrical grid.

In some example embodiments, data related to a start sequence may be displayed via an output device.

At operation 410, the controller 600 may calculate the target load rate 315 based on the loading duration 330 and the desired final load 250 of the turbine 110. The target load rate 315 may be calculated to reach the desired final load 250 within the loading duration 330. According to certain example embodiments, the target load rate 315 may be assumed to remain constant until the desired final load 250 is reached. According to other embodiments, the target load rate 315 may vary according to an objective function, for example, hardware life consumption, fuel consumption, emissions, and so forth. However, the present load rate of the turbine may deviate from the target load rate 315. This may result in untimely reaching of the desired final load 250, so the target load rate 315 may be periodically adjusted based on the measurements of the present load rate.

In certain example embodiments, the calculation may consider inherent variations or load swings that may take place after closing the generator breaker to connect the turbine 110 and the generator 120 to the load/grid 130. To exclude such variations from the calculation, the target load rate 315 may include a predetermined time delay.

At operation 415, the controller 600 may periodically measure a present load at a respective time. Such measurements may determine that the present load rate deviates from the target load rate 315. Deviations may result in the turbine 110 untimely reaching the desired final load 250, and must therefore be corrected.

At operation 420, the controller 600 may periodically recalculate the target load rate 315 based on the measurements of the present load, elapsed time, and determined deviations. According to the recalculation, the target load rate 315 may remain constant until the desired final load is reached, or may vary in correspondence to an objective function.

In certain example embodiments, the recalculation may consider certain operational limits of the turbine 110 and/or the generator 120. For example, such operational limits may include a service life, compressor protection, component thermal limits, combustor dynamics, combustor blow out, combustor emissions, bottoming cycle specifications, and so forth.

After recalculation of the target load rate 315, the present load rate may be adjusted at operation 425 to correspond to the recalculated target load rate 315. Operations 415-425 may be repeated periodically until the desired final load 250 is reached.

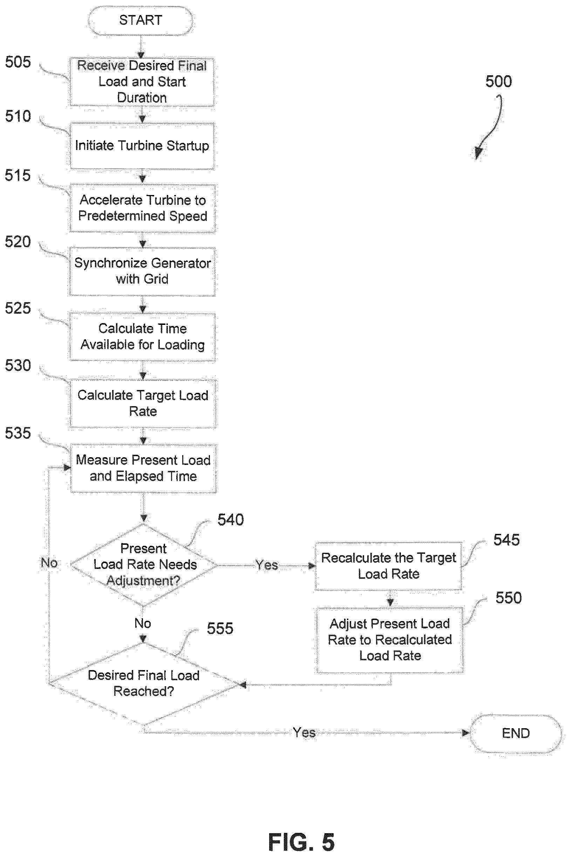

FIG. 5 depicts a process flow diagram illustrating a detailed example method 500, in accordance with an embodiment of the disclosure. The method 500 may commence at operation 505 with receiving a desired final load and start time of a turbine. At operation 510, a turbine startup may be initiated. After the turbine startup is initiated, a sequence of startup operations (ignition, acceleration, synchronization to electrical grid, loading) may be performed. At operation 515, the turbine may be accelerated to a predetermined speed (sometimes called full speed). When this happens, the generator connected to the turbine may be synchronized to the grid at operation 520, thus connecting a power system to a grid.

When the system is connected to the grid, the turbine may start loading to a final load. Since startup operations imply inherent variations, a period of time from the startup initiation to generator synchronization may vary. Depending on how long the acceleration and synchronization lasts, the period of start time left for loading may differ. Thus, in order to achieve the desired level of loading in the specific time, the turbine target load rate may be calculated and applied individually for each startup based on the period of time left after the generator synchronization (loading duration). At operation 525, the remaining time available for loading may be calculated.

At operation 530, the target load rate may be calculated based on the start duration and the desired load. In various embodiments, the calculation of the target load rate may consider various factors and circumstances.

In certain example embodiments, the calculation may consider certain instability that may take place after connecting the system to the grid. For example, such instability may be considered by including a predetermined time delay to calculations.

In certain example embodiments, the calculation may consider operational limits of the turbine, generator, or other equipment (e.g., a service life, compressor protection, component thermal limits, combustor dynamics, combustor blow out, combustor emissions, bottoming cycle specifications, and so forth).

Back to FIG. 5, after calculating and setting the target load rate, the present load and elapsed time may be periodically measured at operation 535 to detect possible deviations that require adjustment of the present load rate at 540. The deviations not corrected during the loading may result in early loadings of many turbines, thereby imposing undue thermal stress on them. To avoid untimely loading, the target load rate may be recalculated at operation 545 based on the measurements. Then, the present load rate may be adjusted to fit the recalculated target load rate at operation 550.

Operations 535-550 may periodically repeat until the desired final load is reached at operation 555.

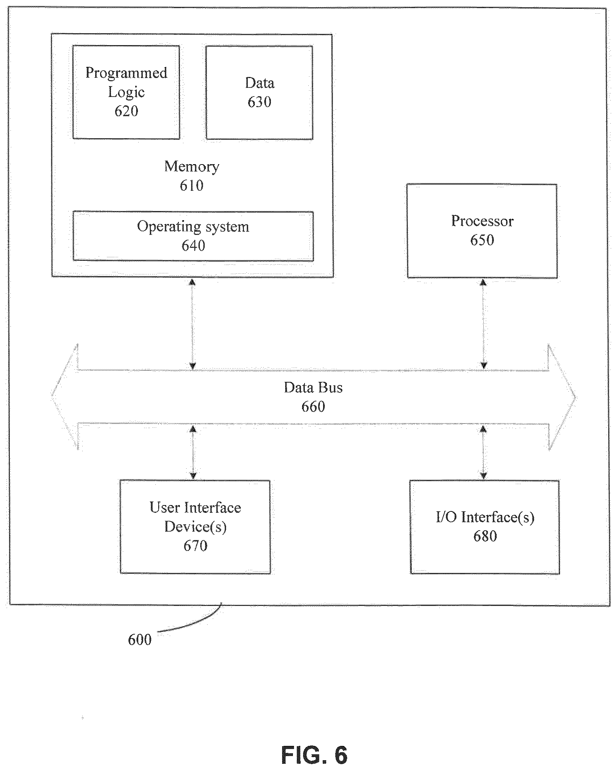

FIG. 6 depicts a block diagram illustrating a controller 600 for controlling a turbine, in accordance with an embodiment of the disclosure. More specifically, the elements of the controller 600 may be used to generate a predictable load upon completion of a start sequence of a turbine. The controller 600 may include a memory 610 that stores programmed logic 620 (e.g., software) and may store data 630, such as a final start time, a desired final load, a target load rate, and the like. The memory 610 also may include an operating system 640. A processor 650 may utilize the operating system 640 to execute the programmed logic 620, and in doing so, also may utilize the data 630. A data bus 660 may provide communication between the memory 610 and the processor 650. Users may interface with the controller 600 via at least one user interface device 670 such as a keyboard, mouse, control panel, or any other device capable of communicating data to and from the controller 600. The controller 600 may be in communication with the gas turbine online while operating, as well as in communication with the gas turbine offline while not operating, via an I/O Interface 680. More specifically, one or more of the controllers 600 may carry out the methods described with reference to FIGs 4-5, including receiving the start duration and the desired final load; calculating the target load rate to reach the desired final load within the start duration; periodically receiving measurements of a present load at a respective time; periodically recalculating the target load rate based on the measurements of the present load; and periodically adjusting a present load rate based on the recalculation. Additionally, it should be appreciated that other external devices or multiple other gas turbines may be in communication with the controller 600 via the I/O Interface 680. In the illustrated embodiment, the controller 600 may be located remotely with respect to the gas turbine; however, it may be co-located or even integrated with the gas turbine. Further, the controller 600 and the programmed logic 620 implemented thereby may include software, hardware, firmware, or any combination thereof. It should also be appreciated that multiple controllers 600 may be used, whereby different features described herein may be executed on one or more controllers 600.

Accordingly, embodiments described herein allow calculating a target load rate for a turbine loading based on specific parameters of each startup, thus generating a predictable load upon completion of a start sequence of a turbine. With a predictable load, timely startup of a turbine may be ensured, thus allowing better management of a loading rate versus hardware life consumption.

References are made to block diagrams of systems, methods, apparatuses, and computer program products according to example embodiments. It will be understood that at least some of the blocks of the block diagrams, and combinations of blocks in the block diagrams, respectively, may be implemented at least partially by computer program instructions. These computer program instructions may be loaded onto a general purpose computer, special purpose computer, special purpose hardware-based computer, or other programmable data processing apparatus to produce a machine, such that the instructions, which execute on the computer or other programmable data processing apparatus, create means for implementing the functionality of at least some of the blocks, or combinations of blocks, in the block diagrams discussed.

These computer program instructions may also be stored in a computer-readable memory that can direct a computer or other programmable data processing apparatus to function in a particular manner, such that the instructions stored in the computer-readable memory produce an article of manufacture including instruction means that implement the function specified in the block or blocks. The computer program instructions may also be loaded onto a computer or other programmable data processing apparatus to cause a series of operational steps to be performed on the computer or other programmable apparatus to produce a computer implemented process, such that the instructions that execute on the computer or other programmable apparatus provide steps for implementing the functions specified in the block or blocks.

One or more components of the systems and one or more elements of the methods described herein may be implemented through an application program running on an operating system of a computer. They also may be practiced with other computer system configurations, including hand-held devices, multiprocessor systems, microprocessor based or programmable consumer electronics, mini-computers, mainframe computers, and the like.

Application programs that are components of the systems and methods described herein may include routines, programs, components, data structures, and so forth that implement certain abstract data types and perform certain tasks or actions. In a distributed computing environment, the application program (in whole or in part) may be located in local memory or in other storage. In addition, or alternatively, the application program (in whole or in part) may be located in remote memory or in storage to allow for circumstances where tasks are performed by remote processing devices linked through a communications network.

Many modifications and other embodiments of the example descriptions set forth herein to which these descriptions pertain will come to mind having the benefit of the teachings presented in the foregoing descriptions and the associated drawings. Thus, it will be appreciated the disclosure may be embodied in many forms and should not be limited to the example embodiments described above. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method (400) for generating a desired final load upon completion of a start sequence of a gas turbine within a start duration, the method comprising:
receiving (405) the start duration and the desired final load;
accelerating the gas turbine to a frequency of the electrical grid and electrically coupling a generator driven by the gas turbine to the electrical grid, thereby synchronizing (520) the gas turbine with the electrical grid,
based at least in part on the start duration and the desired final load, calculating (410) a target load rate suited to reach the desired final load within the start duration; and
**characterized in**, after synchronizing (520) the gas turbine with an electrical grid, periodically
• measuring (415) at least one present load at a respective time while loading the gas turbine with the target load rate;
• based at least in part on the measurements of the at least one present load, recalculating (420, 545) the target load rate so as to achieve the desired final load within the start duration with the recalculated target load rate; and
• based at least in part on the recalculation, applying (425, 550) the recalculated load rate.

2. The method of claim 1, wherein the target load rate is calculated after the synchronization with the electrical grid.

3. The method of any preceding claim, wherein the calculating (410) of the target load rate is based at least in part on an assumption that the target load rate is to remain constant until the desired final load is substantially reached.

4. The method of any preceding claim, wherein the target load rate is recalculated based at least in part on at least one operational limit of the gas turbine.

5. The method of the preceding claim, wherein the at least one operational limit includes one or more of a service life, compressor protection, component thermal limits, combustor dynamics, combustor blow out, combustor emissions, and bottoming cycle specifications.

6. The method of any preceding claim, wherein the target load rate is calculated after a predetermined delay after the synchronization.

7. A system (100) for generating a desired load upon completion of a start sequence of a gas turbine (110), the system (100) comprising:
a controller (600) configured to control the gas turbine (110); and
a processor communicatively coupled to the controller (600) and configured to perform the method of any preceding claim.

8. The system of the preceding claim, further comprising an output device configured to display data related to the start sequence of the gas turbine (110).

## Patentansprüche

1. Verfahren (400) zur Erzeugung einer gewünschten Endlast nach Beendigung einer Startsequenz einer Gasturbine innerhalb einer Startdauer, wobei das Verfahren Folgendes umfasst:
Empfangen (405) der Startdauer und der gewünschten Endlast;
Beschleunigen der Gasturbine auf eine Frequenz des elektrischen Netzes und elektrisches Koppeln eines von der Gasturbine angetriebenen Generators an das Stromnetz, wodurch die Gasturbine mit dem Stromnetz synchronisiert (520) wird,
mindestens teilweise basierend auf der Startdauer und der gewünschten Endlast, Berechnen (410) einer Sollladegeschwindigkeit, die geeignet ist, um die gewünschte Endlast innerhalb der Startdauer zu erreichen; und
**gekennzeichnet durch,** nach Synchronisieren (520) der Gasturbine mit einem Stromnetz, periodisches
• Messen (415) von mindestens einer aktuellen Last zu einem jeweiligen Zeitpunkt während des Ladens der Gasturbine mit der Sollladegeschwindigkeit;
• mindestens teilweise basierend auf den Messungen der mindestens einen aktuellen Last, Neuberechnen (420, 545) der Sollladegeschwindigkeit, um die gewünschte Endlast innerhalb der Startdauer mit der neu berechneten Sollladegeschwindigkeit zu erreichen; und
• mindestens teilweise basierend auf der Neuberechnung, Anwenden (425, 550) der neu berechneten Ladegeschwindigkeit.

2. Verfahren nach Anspruch 1, wobei die Sollladegeschwindigkeit nach der Synchronisation mit dem Stromnetz berechnet wird.

3. Verfahren nach einem der vorstehenden Ansprüche, wobei das Berechnen (410) der Sollladegeschwindigkeit mindestens teilweise auf einer Annahme basiert, dass die Sollladegeschwindigkeit konstant bleibt, bis die gewünschte Endlast im Wesentlichen erreicht ist.

4. Verfahren nach einem der vorstehenden Ansprüche, wobei die Sollladegeschwindigkeit mindestens teilweise basierend auf mindestens einer Betriebsgrenze der Gasturbine neu berechnet wird.

5. Verfahren nach einem der vorstehenden Ansprüche, wobei die mindestens eine Betriebsgrenze eins oder mehrere von einer Betriebslebensdauer, einem Kompressorschutz, thermischer Komponentengrenzen, Brennkammerdynamik, Brennkammerausblasung, Brennkammeremissionen und Bottoming-Zyklusspezifikationen umfasst.

6. Verfahren nach einem der vorstehenden Ansprüche, wobei die Sollladegeschwindigkeit nach einer vorgegebenen Verzögerung nach der Synchronisation berechnet wird.

7. System (100) zum Erzeugen einer gewünschten Last nach Beendigung einer Startsequenz einer Gasturbine (110), wobei das System (100) Folgendes umfasst:
eine Steuereinrichtung (600), die dazu konfiguriert ist, die Gasturbine (110) zu steuern; und
einen Prozessor, der kommunikativ an die Steuereinrichtung (600) gekoppelt ist und dazu konfiguriert ist, das Verfahren nach einem der vorstehenden Ansprüche auszuführen.

8. System nach dem vorstehenden Anspruch, ferner umfassend eine Ausgabevorrichtung, die zum Anzeigen von Daten in Bezug auf die Startsequenz der Gasturbine (110) konfiguriert ist.

## Revendications

1. Procédé (400) pour générer une charge finale souhaitée lors de l'achèvement d'une séquence de démarrage d'une turbine à gaz dans une durée de démarrage, le procédé comprenant :
la réception (405) de la durée de démarrage et de la charge finale souhaitée ;
l'accélération de la turbine à gaz jusqu'à une fréquence du réseau électrique et le couplage électrique d'un générateur entraîné par la turbine à gaz au réseau électrique, synchronisant de ce fait (520) la turbine à gaz avec le réseau électrique,
sur la base au moins en partie de la durée de démarrage et de la charge finale souhaitée, le calcul (410) d'un taux de charge cible adapté pour atteindre la charge finale souhaitée dans la durée de démarrage ; et
**caractérisé par,** après la synchronisation (520) de la turbine à gaz avec un réseau électrique, périodiquement
• la mesure (415) d'au moins une charge présente à un moment respectif tout en chargeant la turbine à gaz avec le taux de charge cible ;
• sur la base au moins en partie des mesures de l'au moins une charge présente, le recalcul (420, 545) du taux de charge cible de manière à obtenir la charge finale souhaitée dans la durée de démarrage avec le taux de charge cible recalculé ; et
• sur la base au moins en partie du recalcul, l'application (425, 550) du taux de charge recalculé.

2. Procédé selon la revendication 1, dans lequel le taux de charge cible est calculé après la synchronisation avec le réseau électrique.

3. Procédé selon l'une quelconque des revendications précédentes, dans lequel le calcul (410) du taux de charge cible est basé au moins en partie sur une hypothèse selon laquelle le taux de charge cible doit rester constant jusqu'à ce que la charge finale souhaitée soit sensiblement atteinte.

4. Procédé selon l'une quelconque des revendications précédentes, dans lequel le taux de charge cible est recalculé en fonction au moins en partie d'au moins une limite opérationnelle de la turbine à gaz.

5. Procédé selon la revendication précédente, dans lequel l'au moins une limite opérationnelle inclut une ou plusieurs d'une durée de vie, d'une protection de compresseur, de limites thermiques de composant, d'une dynamique de chambre de combustion, d'une explosion de chambre de combustion, d'émissions de combustion, et de spécifications de cycle de fond.

6. Procédé selon l'une quelconque des revendications précédentes, dans lequel le taux de charge cible est calculé après un délai prédéterminé après la synchronisation.

7. Système (100) pour générer une charge souhaitée lors de l'achèvement d'une séquence de démarrage d'une turbine à gaz (110), le système (100) comprenant :
un dispositif de commande (600) configuré pour commander la turbine à gaz (110) ; et
un processeur couplé en communication au dispositif de commande (600) et configuré pour exécuter le procédé selon l'une quelconque des revendications précédentes.

8. Système selon la revendication précédente, comprenant en outre un dispositif de sortie configuré pour afficher des données relatives à la séquence de démarrage de la turbine à gaz (110).
